Europäisches Patentamt

(19) European Patent Office

Office européen des brevets

(11) Publication number: **0 244 982**
**A2**

# (12) EUROPEAN PATENT APPLICATION

(21) Application number: 87303525.7

(22) Date of filing: 22.04.87

(51) Int. Cl.⁴: **C 08 J 5/18**
**C 08 L 23/04**

(30) Priority: 25.04.86 US 855972

(43) Date of publication of application:
**11.11.87 Bulletin 87/46**

(84) Designated Contracting States: **DE FR GB IT SE**

(71) Applicant: **EL PASO PRODUCTS COMPANY**
**2400, South Grandview Avenue**
**Odessa, Texas 79760 (US)**

(72) Inventor: **Reich, Gary John**
**Route 5 Box 353D**
**Chippewa Falls Wisconsin 54729 (US)**

**Partlow, Richard Louis**
**1106 Brookdale Road**
**Naperville Illinois 60540 (US)**

(74) Representative: **Myerscough, Philip Boyd et al**
**J.A.Kemp & Co. 14, South Square Gray's Inn**
**London, WC1R 5EU (GB)**

(54) **Film compositions.**

(57) Compositions useful in the manufacture of soft, heat sealable films and sheeting material of improved strength are prepared from blends of 30 to 80 wt% of an ethylene - methyl acrylate copolymer (EMA) and 70 to 20 wt% of a very low density ethylene polymer (VLDPE).

EP 0 244 982 A2

**Description**

<u>"FILM COMPOSITIONS"</u>

Films made from ethylene - methyl acrylate copolymers (EMA) are very soft, limp and flexible with excellent low-temperature seal characteristics. They have been used for disposable gloves, medical packaging and hospital sheeting, and also in other applications such as a heat seal layer in coextrusions.

However the strength properties of the materials are quite low. Specifically, the low puncture resistance, impact strength and tensile strength render the films unsuitable for many applications.

The present invention provides a resin composition based on EMA, which composition is suitable for the manufacture of shaped articles, films in particular, having improved puncture resistance, tear strength and tensile strength, while retaining the desirable properties of EMA resins.

In accordance with the present invention there is provided a resin composition comprising:

(A) from 30 to 80 percent by weight of an ethylene - methyl acrylate copolymer (EMA) and

(B) from 70 to 20 percent by weight of a very low density ethylene polymer (VLDPE) having a density below 0.915 gms/cm$^3$.

The preferred concentration of component (A) in the composition is between 50 and 70 wt% and that of component (B) is between 50 and 30 wt%.

The EMA copolymer suitably contains from 17 to 22 wt% polymerized methyl acrylate groups. It can be produced in a conventional high pressure autoclave reactor by the polymerization of a mixture of ethylene and methyl acrylate. EMA copolymers are available commercially, e.g. the Poly-Eth ® resins from Chevron Chemical Company.

The VLDPE is a linear nonpolar polymer of narrow molecular weight distribution. It is a copolymer of ethylene and at least one C$_4$ to C$_{10}$ alphaolefin, the copolymer having a density of below 0.915 g/cm$^3$, such as between 0.890 and below 0.915 g/cm$^3$. The melt index of the VLDPE copolymer is from 0.1 to 10g/10 min. VLDPE copolymer resins are commercially available, e.g. the UCAR ® FLX resins from Union Carbide Corporation. The preferred density of the VLDPE resin component is between 0.902 and 0.910 gms/cm$^3$ in order to prevent the surfaces of any articles shaped from the composition from being sticky or tacky.

The VLDPE concentration in the composition should not exceed 70 weight percent to prevent loss of the excellent tactile property associated with EMA. It is critical that VLDPE be selected as component (B). For instance, the use of a linear low density polyethylene (LLDPE) instead would result in an unacceptably stiff product. Also, at the higher end of the concentration range the heat sealability would suffer. At lower concentrations where the stiffness and heat sealability no longer would be a problem, the improvements in puncture resistance, tear strength and tensile strength would be quite insufficient to be acceptable.

The composition can, if desired, also contain various additives, e.g. antiblocking agents, slip additives and pigments, as known in the art.

Thin films made from the resin composition are used with advantage in the manufacture of disposable gloves, which are soft and pliable yet much stronger than conventional disposable gloves made from EMA alone. Other uses include medical packaging, inner coverings for foamed cushions or pads to be inserted into outer decorative covers.

Various methods may be used for producing the film, e.g. by any of the known tubular blowing methods or by the so called chilled roll casting methods. The thickness of the film can be between 5 and 250 μm (0.2 and 2 mil), and should preferably be between 7.6 and 38 μm (0.3 and 1.5 mil). Disposable glove film preferably has a thickness between 20 and 30 μm (0.8 and 1.2 mil).

Blown or cast thicker films or sheet material (e.g. of thickness in the range between 50 and 250 μm (2 and 10 mil)) made from the resin blend are used with great advantage in the manufacture of hypothermia pads or hospital bed cushions. These are pads made by sealing film to film to create channels through which water or other heating or cooling fluids can flow (in the case of hypothermia pads) or to create air cavities (in the case of bed pads). These pads must have strong seals so that they do not rupture, must be extremely soft to conform to varying body shapes, and must not be stiff creating annoying noise and rattle. The use of the EMA/VLDPE films satisfy all the requirements of acceptable pads or cushions of these types.

The follow Examples are provided to further illustrate the invention.

<u>EXAMPLES 1-5</u>

Five resin compositions were prepared with the component concentrations shown in the Table. The EMA resin was obtained from Chevron Chemical Company under the trade name Poly-Eth ® 2258. The copolymer contains about 20 wt% polymerized methyl acrylate units and is a material approved for food packaging by the U.S. Food and Drug Administration (FDA). The VLDPE component was Union Carbide Corporation's DFDA ® 1137 Natural 7 resin, which has FDA approval for food contract applications.

Films of 25 μm (1 mil) thickness were blown from each of the compositions of the Examples and subjected to physical testing. The results of such testing are shown in the Table.

| Example | 1 | 2 | 3 | 4 | 5 |
|---|---|---|---|---|---|
| Blend Comp. | | | | | |
| EMA - Wt% | 100 | 80 | 60 | 38[1] | 0 [2] |
| VLDPE-Wt% | 0 | 20 | 38 | 60 | 95 |
| Tensiles | | | | | |
| Elongation | | | | | |
| MD,% | 260 | 315 | 355 | 370 | 655 |
| TD,% | 605 | 600 | 625 | 685 | 785 |
| Pull | | | | | |
| MD,MPa(psi) | 22.4(3250) | 27.2(3950) | 32.3(4690) | 35.95(5215) | 32.9(4780) |
| TD,MPa(psi) | 18.8(2725) | 18.65(2705) | 18.7(2715) | 23.35(3385) | 26.5(3850) |
| 1% Secant Modulus | | | | | |
| MD, MPa(psi) | 53(7700) | 58(8400) | 65(9400) | 65.5(9500) | 107(15,500) |
| TD, MPa(psi) | 63(9100) | 73(10600) | 75(10900) | 85.5(12400) | 125(18,000) |
| Tear | | | | | |
| MD grams/25.4 μm(mil) | 34 | 28 | 32 | 32 | 176 |
| TD grams/25.4 μm(mil) | 105 | 177 | 316 | 401 | 336 |
| Spencer Impact gms/ 25.4 μm(mil) | 867 | 872 | 839 | 1111 | - - - - |

(1) Remainder is 2% slip and antiblock additives

(2) Remainder is 5% slip and antiblock additives

0 244 982

**Claims**

1. A resin composition suitable for processing into a film comprising:-
   (A) from 30 to 80 wt% of an ethylene-methyl acrylate copolymer (EMA) and
   (B) from 70 to 20 percent by weight of a very low density ethylene polymer (VLDPE) having a density below 0.915 gms/cm$^3$.

2. A composition according to claim 1 wherein component (A) contains from 17 to 22 percent by weight of polymerized methyl acrylate groups.

3. A composition according to claim 1 or 2 wherein component (B) is a copolymer of ethylene and at least one $C_4$ to $C_{10}$ alpha-olefin and has a density between 0.902 and 0.910 gms/cm$^3$.

4. A composition according to claim 1, 2 or 3 wherein the concentration of component (A) is between 50 and 70 percent by weight and that of component (B) is between 50 and 30 percent by weight.

5. A film prepared from a resin composition as claimed in any one of the preceding claims.

6. A film according to claim 5 having a thickness between 5 and 250 $\mu$m (0.2 and 10 mil).

7. A film according to claim 5 having a thickness between 7.6 and 38 $\mu$m (0.3 and 1.5 mil).

8. A film according to claim 5 having a thickness bwtween 50 and 250 $\mu$m (2 and 10 mil).